# EUROPÄISCHE PATENTSCHRIFT

(11) **EP 1 882 648 B1**
(45) Veröffentlichungstag und Bekanntmachung des Hinweises auf die Patenterteilung: **12.12.2012**
(21) Anmeldenummer: 07111905.1
(22) Anmeldetag: 06.07.2007
(51) Int. Cl.: B65G 1/04, B65G 1/137

(54) **Verfahren zum Ein- und Auslagern von Stückgütern, insbesondere von Getränkekisten, und Lagersystem hierfür**
Method for storing and retrieving goods, in particular drinks crates and storage system therefor
Procédé destiné à stocker et déstocker des marchandises au détail, en particulier de caisses de boissons, et système de stockage correspondant

(30) Priorität: 28.07.2006 DE 102006035049
(43) Veröffentlichungstag der Anmeldung: 30.01.2008
(73) Patentinhaber: SIEMENS AKTIENGESELLSCHAFT, 80333 München (DE)
(72) Erfinder: Tanch, Gerhard, 74374 Zaberfeld (DE)

(56) Entgegenhaltungen:
- EP-A- 1 384 692
- WO-A-02/059021
- DE-U- 20 107 533
- DE-U- 29 805 946
- GB-A- 2 052 457
- US-A- 3 750 804

## Beschreibung

Die Erfindung betrifft ein Verfahren zum Ein- und Auslagern von stückgütern, insbesondere von Getränkekisten, in beziehungsweise aus einem Lagersystem für einen mit einem als Durchlauflager ausgebildeten und eine Vielzahl von Lagerkanälen aufweisenden Lagerbereich für die Stückgüter mit einer Eingangsseite und einer Ausgangsseite, bei dem die Stückgüter von einem der Eingangsseite des Lagerbereiches zugeordneten ersten Regalbediengerät in die Lagerkanäle eingelagert werden.

Auch betrifft die Erfindung ein Lagersystem für Stückgüter, insbesondere für Getränkekisten, mit einem als Durchlauflager ausgebildeten und eine Vielzahl von Lagerkanälen aufweisenden Lagerbereich für die Stückgüter mit einer Eingangsseite und einer Ausgangsseite und einem der Eingangsseite des Lagerbereiches zugeordneten ersten Regalbediengerät für die Einlagerung der Stückgüter.

In DE 298 05 946 U1 ist ein Regallagersystem für Stückgut beschrieben, das zumindest ein Regal mit einer Vielzahl von nebeneinander bzw. übereinander angeordneten Fächern für die Aufnahme in Ein- und Auslagerungsrichtung gesehen von mehreren Stückgutteilen hintereinander umfaßt. Außerdem sind eine Einlagerungsvorrichtung und einer Auslagerungsvorrichtung vorgesehen, die jeweils entlang des Regals verfahrbar sind. Dabei ist das Stückgut nach Art eines Durchlauflagers an einer Befüllseite des Regals von der Einlagerungsvorrichtung einlagerbar und an der gegenüberliegenden Kommissionierungsseite des Regals von der Auslagerungsvorrichtung in eine Sammelvorrichtung auslagerbar. Die Böden der Fächer sind in Ein- und Auslagerungsrichtung gesehen für ein Ein- und Ausschieben der Stückgutteile in Verlängerung der Ebene der Böden frei zugänglich.

Aus dem deutschen Patent DE 44 06 056 C2 ist ein Getränketerminal zur automatischen Ausgabe von Getränkekisten bekannt. Der Getränketerminal besteht im Wesentlichen aus einem Liefer- und Lagerbereich, einem Zwischenlagerbereich und einen Verkaufsbereich. Für die Anlieferung der Paletten mit den Getränkekisten und den Abtransport der Paletten mit den leeren Getränkekisten, d. h. die Getränkekisten sind mit leeren Getränkeflaschen befüllt, teilbefüllt oder leer, mit dem Lastkraftwagen hat der Liefer- und Lagerbereich einen Lieferterminal mit zwei Rollenbahnen, über die Paletten dem Lagerbereich zugeführt beziehungsweise von diesem abgezogen werden. Die Rollenbahnen sind über ein erstes Regalbediengerät mit dem als Hochregal ausgebildeten Lagerbereich verbunden. Über das erste Regalbediengerät wird auch der Zwischenlagerbereich mit Getränkekisten aus dem Lagerbereich versorgt. Hierfür entnimmt das erste Regalbediengerät eine Palette mit Getränkekisten und übergibt diese an eine Vereinzelungsvorrichtung, von der die Getränkekisten von der Palette getrennt und hintereinander einem Förderband zugeführt werden. Von diesem Förderband übernimmt ein zweites Regalbediengerät eine oder mehrere Getränkekisten und führt diese dem Zwischenlagerbereich zu. Der Zwischenlagerbereich ist als Durchlaufregal mit mehreren Ebenen ausgebildet, bei dem jeder Lagerkanal die Getränkekisten einer Getränkesorte aufnimmt. In jedem Lagerkanal ist ein Staurollenförderer angeordnet, um die Getränkekisten sicher von der Aufgabeseite zu der Entnahmeseite zu transportieren. Auch defekte Getränkekisten sollen so sicher transportiert werden können. Alternativ kann anstatt des Staurollenförderers auch eine angetriebene Rollenbahn eingesetzt werden, die auch rückwärts angetrieben werden kann, um die Getränkekisten lückenlos in dem Lagerkanal lagern und transportieren zu können. Auf der Entnahmeseite schließt sich ein drittes Regalbediengerät an, von dem je nach Kundenwunsch die Getränkekisten in der gewünschten Getränkesorte aus dem Durchlaufregal entnommen und an eine Ausgabe-Rollenbahn übergeben werden. Am Ende der Ausgabe-Rollenbahn ist eine Getränkeausgabestelle angeordnet, an der ein Kunde seine Getränke in Empfang nimmt. Neben der Getränkeausgabestelle ist eine Leergutannahmestelle angeordnet. Diese Leergutannahmestelle ist über eine Leergut-Rollenbahn mit dem dritten Regalbediengerät verbunden, dass mit dem Leergut einen Leergutspeicher beschickt, der wie das Durchlaufregal aufgebaut ist. An der Entnahmeseite des Leergutspeichers wird das Leergut von dem zweiten Regalbediengerät an eine Palettiervorrichtung geliefert und von dort mittels des ersten Regalbediengeräts an die Rollenbahn des Lieferterminals.

Ausgehend von diesem Stand der Technik liegt der Erfindung die Aufgabe zu Grunde, ein Verfahren zum Ein- und Auslagern von Stückgütern, insbesondere von Getränkekisten, und ein Lagersystem hierfür zu schaffen, dass sich durch eine zuverlässige und einfache Betriebsweise auszeichnet.

Diese Aufgabe wird durch ein Verfahren zum Ein- und Auslagern von Stückgütern, insbesondere von Getränkekisten, mit den Merkmalen des Anspruchs 1 und ein Lagersystem mit den Merkmalen des Anspruchs 9 gelöst. Vorteilhafte Ausgestaltungen der Erfindung sind in den Ansprüchen 2 bis 8 und 10 bis 20 angegeben.

Erfindungsgemäß wird bei dem Verfahren zum Ein- und Auslagern von Stückgütern, insbesondere von Getränkekisten, in beziehungsweise aus einem Lagersystem für einen mit einem als Durchlauflager ausgebildeten und eine Vielzahl von Lagerkanälen aufweisenden Lagerbereich für die Stückgüter mit einer Eingangsseite und einer Ausgangsseite, bei dem die Stückgüter von einem der Eingangsseite des Lagerbereiches zugeordneten ersten Regalbediengerät in die Lagerkanäle eingelagert werden, eine zuverlässige und einfache Betriebsweise dadurch erreicht, dass nach erfolgtem Abzug von Stückgütern aus einem Lagerkanal mittels des ersten Regalbediengerätes weitere Stückgüter in die Lagerkanäle eingelagert werden und hierbei die zuvor in dem Lagerkanal abgestellten Stückgüter innerhalb des Lagerkanals von dem Regalbediengerät, vorzugsweise von den weiteren gerade eingelagerten Stückgütern, in Richtung der Ausgangsseite des Lagerkanals verschoben werden. Diese Ausgestaltung hat insbesondere den Vorteil, dass die Lagerkanäle nicht als Rollenbahnen ausgebildet sind sondern einfach als eine passive Abstellfläche für die Stückgüter. Somit befinden sich in den Lagerkanälen keine beweglichen Teile, die verschleißen können oder störanfällig sind. Auch ist die Bauweise der Lagerkanäle somit konstruktiv sehr einfach und kostengünstig realisierbar.

Besonders vorteilhaft ist, dass die Stückgüter während deren Verschiebebewegung in den Lagerkanälen gleitend bewegt werden. Der Lagerkanal kann somit besonders einfach ausgebildet werden.

Das Handling der Stückgüter erfolgt besonders schonend in deren stabilen Bodenbereich, da die Stückgüter mittels eines teleskopartigen ersten oder zweiten Ein- und Auslagerungselementes in den Lagerkanal hineinbewegt und durch eine Senkbewegung dort abgestellt werden.

Neben den Ein- und Auslagerungselementen ist vorgesehen, dass bei Bedarf die in dem Lagerkanal befindlichen Stückgüter mittels eines an dem ersten Regalbediengerät angeordneten Schubelementes in Richtung der Ausgangsseite des Lagerkanals verschoben werden, wobei die Einschubtiefe des Schubelementes größer ist als die des ersten oder zweiten Ein- und Auslagerungselementes. Die Lagerkanäle können somit unabhängig von den Ein- und Auslagerungselementen verlängert werden.

Eine weiterhin einfache Ausgestaltung der Lagerkanäle wird dadurch erreicht, dass die Stückgüter von einem der Ausgangsseite des Lagerkanals zugeordneten zweiten Regalbediengerät aus den Lagerkanälen ausgelagert werden, in dem ein drittes oder viertes Ein- und Auslagerungselement in den Lagerkanal einfährt und die gewünschte Anzahl von Stückgütern anhebt und über ein an der Ausgangsseite des Lagerbereiches angeordnetes Stoppelement, das die Funktion einer Durchschubsicherung hat, herüber gehoben werden.

Die einfache Ausgestaltung der Lagerkanäle wird auch für die Abstellplätze der Regalbediengeräte übernommen, so dass die von den Ein- und Auslagerungselementen aufgenommenen Stückgüter von den Ein- und Auslagerungselementen auf einen Aufnahmeplatz des ersten oder zweiten Regalbediengerätes geschoben werden.

Um eine einfache Förderung der Stückgüter zu und von den Regalbediengeräten weg zu erreichen, ist vorgesehen, dass für die Aufnahme oder Abgabe von Stückgütern mittels der Ein- und Auslagerungselemente von einer Bereitstell-Plattform oder einer Hubplattform in der Bereitstell-Plattform oder der Hubplattform eine in Aufnahme- oder Abgaberichtung mittige Längsöffnung durch Absenken einer Verschlussplatte geöffnet wird, in die Ein- und Auslagerungselemente anschließend einfahren.

Um den Schiebevorgang sicher ausführen zu können, ist vorgesehen, dass die mittige Längsöffnung durch Anheben der Verschlussplatte geschlossen wird und anschließend die Stückguter quer zur Aufnahme- oder Abgaberichtung auf die Bereitstell-Plattform geschoben oder von der Hubplattform herunter geschoben werden.

Erfindungsgemäß wird bei einem Lagersystem für Stückgüter, insbesondere für Getränkekisten, mit einem als Durchlauflager ausgebildeten und eine Vielzahl von Lagerkanälen aufweisenden Lagerbereich für die Stückgüter mit einer Eingangsseite und einer Ausgangsseite und einem der Eingangsseite des Lagerbereiches zugeordneten ersten Regalbediengerät für die Einlagerung der Stückgüter, eine zuverlässige und einfache Betriebsweise auszeichnet dadurch erreicht, dass die Lagerkanäle derart passiv ausgebildet sind, dass das Stückgut innerhalb der Lagerkanäle von der Eingangsseite zu der Ausgangsseite von außen bewegt wird. Die Vorteile dieses Lagersystems erschließen sich aus der vorstehenden Vorteilsbeschreibung zu dem erfindungsgemäßen Verfahren.

Eine konstruktiv einfache Ausgestaltung der Lagerkanäle wird dadurch erreicht, dass das Stückgut innerhalb der Lagerkanäle von der Eingangsseite zu der Ausgangsseite gleitend bewegbar ist.

Besonders einfach ist diese, wenn jeder Lagerkanal im Wesentlichen aus zwei Winkelprofilen besteht, von denen das Stückgut bei der Bewegung von der Eingangsseite zu der Ausgangsseite seitlich führbar und tragbar ist.

Damit die Ein- und Auslagerungselemente ungehindert in den Lagerkanal einfahren können, sind in Längserstreckung der Lagerkanäle gesehen die Winkelprofile parallel und mit Abstand zueinander angeordnet.

Die zuverlässige Handhabung der Stückgüter wird dadurch erreicht, dass an dem ersten Regalbediengerät mindestens ein teleskopartiges Ein- und Auslagerungselement angeordnet ist, das zur Einlagerung einzelner oder einer Gruppe von Stückgütern in den Lagerkanal mit den Stückgütern hineinbewegbar und diese durch eine Senkbewegung dort abstellbar sind.

In konstruktiv einfacher Ausgestaltung ist vorgesehen, dass das Ein- und Auslagerungselement aus einem teleskopartig mit einem Zwischenträger und einem Endträger verbundenen Grundträger besteht und zur Einlagerung der Stückgüter zwischen die Winkelprofile einfahrbar ist.

Um sicher zu stellen, dass auch bei langen Lagerkanälen, diese passiv ausgestaltet sein können, ist vorgesehen, dass an dem ersten Regalbediengerät neben dem mindestens einem teleskopartigen Ein- und Auslagerungselement ein Schubelement angeordnet ist, das zum Nachschieben einzelner oder einer Gruppe von Stückgütern in den Lagerkanal hineinbewegbar ist, wobei die Einschubtiefe des Schubelementes größer ist als die des ersten oder zweiten Ein- und Auslagerungselementes.

Dieses Schubelement besteht vorzugsweise aus einem mit dem ersten Regalbediengerät verbundenen Teleskopteil und einem an seinem dem ersten Regalbediengerät abgewandten Ende angeordneten Schubwagen und der Schubwagen ist auf den Winkelprofilen verfahrbar.

Um die Lagerkanäle auch auf deren Ausgangsseite passiv ausgestalten zu können, ist vorgesehen, dass der Ausgangsseite des Lagerbereiches ein zweites Regalbediengerät für die Kommissionierung der Stückgüter zugeordnet ist und das zweite Regalbediengerät mindestens ein drittes oder ein viertes Einund Auslagerungselement für die Stückgüter aufweist, von dem die gewünschte Anzahl von Stückgütern anhebbar und über ein an der Ausgangsseite des Lagerbereiches angeordnetes Stoppelement hebbar sind.

Die einfache Ausbildung der Lagerkanäle ist auch für die Regalbediengeräte übernommen worden, so dass auf dem ersten und dem zweiten Regalbediengerät einen Aufnahmeplatz für die Stückgüter angeordnet ist, auf die mittels der Ein- und Auslagerungselemente die aufgenommenen Stückgüter schiebbar sind.

Um die Zu- und Abfuhr der Stückgüter zu und von den Regalbediengeräten auch einfach auszugestalten, ist vorgesehen, dass dem ersten und zweiten Regalbediengerät für die Aufnahme oder Abgabe von Stückgütern mittels der Ein- und Auslagerungselemente eine Bereitstell-Plattform oder eine Hubplattform zugeordnet sind, in der Bereitstell-Plattform oder der Hubplattform eine in Aufnahme- oder Abgaberichtung mittige Längsöffnung angeordnet ist, in die Ein- und Auslagerungselemente einfahrbar sind und die mittels einer anhebbaren Verschlussplatte verschließbar ist.

Hierbei ist der Bereitstell-Plattform oder der Hubplattform ein Schieber zugeordnet, über den die Stückguter quer zur Aufnahme- oder Abgaberichtung bei verschlossener Längsöffnung auf die Bereitstell-Plattform oder von der Hubplattform herunter schiebbar sind.

Nachfolgend wird die Erfindung an Hand eines in einer Zeichnung dargestellten Ausführungsbeispiels näher erläutert. Es zeigen:
- FIG 1: eine schematische Ansicht eines Lagersystems,
- FIG 2: eine schematische Ansicht eines Lagerbereichs des Lagersystems nach FIG 1,
- FIG 3a und 3c: verschiedene Phasen eines Aufnahmevorganges von Stückgütern in Form von Getränkekisten auf ein Regalbediengerät,
- FIG 4: eine Seitenansicht von FIG 3c und
- FIG 5a und 5b: eine schematische Ansicht einer Hubplattform einer Ausgabeeinheit.

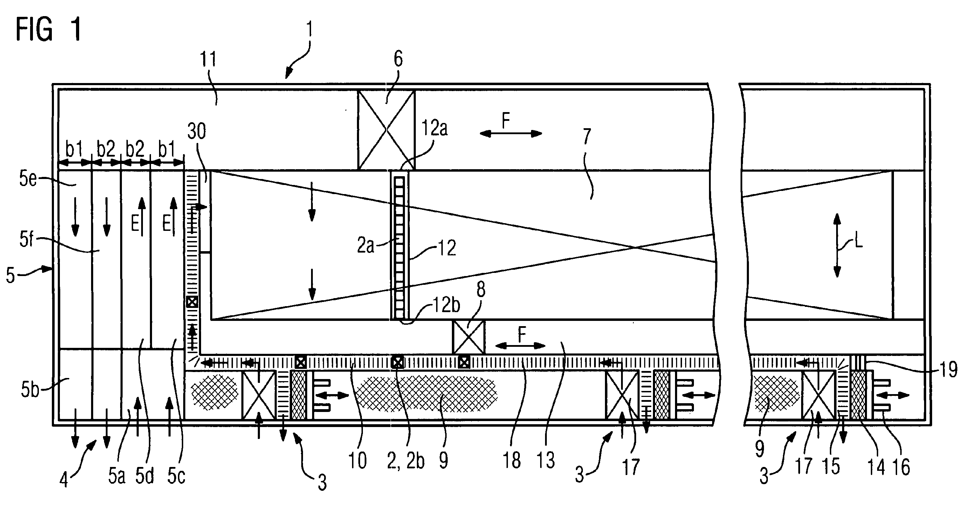

Die einzige FIG 1 zeigt eine schematische Ansicht eines Lagersystems 1, mit dem Stückgüter 2 in Form von vollen Getränkekisten 2a, d. h. die darin transportierten Getränkeflaschen sind gefüllt, automatisch in einem Aus- und Rückgabebereich 3 ausgegeben werden können und leere Getränkekisten 2b, d. h. die Getränkekisten 2b sind leer oder mit leeren Getränkeflaschen vollständig oder teilweise gefüllt, angenommen werden können. Das Lagersystem 1 besteht im Wesentlichen aus einen Anlieferungs- und Abholungsbereich 4, einem Bereitstellbereich 5, einem ersten Regalbediengerät 6, einem Lagerbereich 7, einem zweiten Regalbediengerät 8, einem Zwischenspeicherbereich 9, dem vorgenannten Aus- und Rückgabebereich 3 und einem Leergutförderer 10.

In dem Anlieferungs- und Abholungsbereich 4 werden in üblicher Weise von Lastkraftwagen die auf Paletten gestapelten vollen Getränkekisten 2a angeliefert und die ebenfalls auf Paletten gestapelten leeren Getränkekisten 2b abgeholt. Der Anlieferungs- und Abholungsbereich 4 grenzt an den Bereitstellbereich 5 an, an den die angelieferten vollen Getränkekisten 2a übergeben werden beziehungsweise von dem die leeren Getränkekisten 2b abgezogen werden.

Dem Weg einer Anlieferung von vollen auf Paletten gestapelten Getränkekisten 2a folgend wird das Lagersystem 1 nachfolgend beschrieben.

Die auf Paletten gestapelten vollen Getränkekisten 2a werden einem Vereinzelungsbereich 5a des Bereitstellbereiches 5 zugeführt. Dort werden die vollen Getränkekisten 2a von den Paletten entstapelt und entweder einer ersten Bereitstell-Rollenbahn 5c mit einer ersten Breite b1 oder einer zweiten Bereitstell-Rollenbahn 5d mit einer zweiten Breite b2 zugeführt. An Stelle von Rollenbahnen können auch andere geeignete Stetigförderer eingesetzt werden. Auch ist denkbar, die nachfolgend beschriebenen Winkelprofile 25 zu verwenden.

Die Bereitstell-Rollenbahnen 5c und 5d weisen verschiedene Breiten auf, um den unterschiedlichen Abmessungen der Stückgüter 2 Rechnung zu tragen. Des Weiteren können die beiden Bereitstell-Rollenbahnen 5c und 5d jeweils die Funktion der Blockvereinzelung aufweisen, um eine Gruppe 2c von einzulagernden Stückgütern 2 durch eine Lücke von den übrigen Stückgütern 2 auf einer der Bereitstell-Rollenbahnen 5c und 5d zu trennen. Im vorliegenden Fall umfasst die Gruppe 2c acht bis fünfzehn volle Getränkekisten 2a. Je nach Ausbildung des den beiden Bereitstell-Rollenbahnen 5c und 5d nachgeordneten ersten Regalbediengerätes 6 ist die Ausbildung einer Lücke zur Bildung einer Gruppe 2c von einzulagernden Stückgütern 2 nicht erforderlich.

Über die Bereitstell-Rollenbahnen 8a und 8b werden die Stückgüter 2 in Einlagerungsrichtung E dem Lagerbereich 7 zugeführt.

An dem ausgangsseitigen Ende der Bereitstell-Rollenbahnen 5c und 5d sind jeweils nicht dargestellte Stoppelemente angeordnet, die beispielsweise als verriegelbare und um eine horizontale sowie quer zur Einlagerungsrichtung E ausgerichtete Achse schwenkbare Auflaufklappen ausgebildet sind. Bei Verwendung der Winkelprofile 25 können die Auflaufklappen entfallen und bedarfsweise die nachfolgend beschriebenen Stoppelemente vorgesehen sein. Mittels dieser Auflaufklappen kann neben der Stoppfunktion auch eine Überbrückung des Spaltes zwischen dem ausgangsseitigen Ende der Bereitstell-Rollenbahnen 5c und 5d und dem ersten Regalbediengerät 5 einfach erreicht werden. Auch können selbstverständlich mehr als zwei Bereitstell-Rollenbahnen 5c und 5d vorgesehen sein.

An den Bereitstellbereich 5 mit den Bereitstell-Rollenbahnen 5c und 5d schließt sich ausgangsseitig das erste Regalbediengerät 6 an, dass in einem ersten Gang 11 horizontal und rechtwinklig zur Einlagerungsrichtung E der Bereitstell-Rollenbahnen 5c und 5d in Fahrtrichtung F verfahrbar ist. Das erste Regalbediengerät 6 weist in üblicher Weise und daher nicht dargestellt ein Fahrwerk, einen sich daran anschließenden vertikalen Mast, einen daran in Vertikalrichtung verfahrbaren Hubtisch mit darauf angeordneten Ein- und Auslagerungsvorrichtungen auf.

Mittels seiner Ein- und Auslagerungsvorrichtungen entnimmt das erste Regalbediengerät 6 eine Gruppe 2c von vollen Getränkekisten 2a von einem der beiden Bereitstell-Rollenbahnen 5c und 5d, verfährt entlang des ersten Ganges 11 zu dem Lagerbereich 7, der als Durchlaufregal ausgebildet ist, mit einer Vielzahl von Lagerkanälen 12, von denen nur einer exemplarisch dargestellt ist und die mit ihrer Längserstreckung parallel zur Einlagerungsrichtung E ausgerichtet sind. Wiederum mittels seiner Ein- und Auslagerungsvorrichtungen übergibt das erste Regalbediengerät 6 die Gruppe 2c von vollen Getränkekisten 2a an einen Lagerkanal 12 des Lagerbereichs 7. In jedem Lagerkanal 12 sind nur volle Getränkekisten 2a nur einer Getränkesorte gelagert.

An der der Eingangsseite 12a der Lagerkanäle 12 gegenüberliegenden Ausgangseite 12b der Lagerkanäle 12 schließt sich ein zweiter Gang 13 für das zweite Regalbediengerät 8 an, dessen Fahrtrichtung F parallel zur Fahrtrichtung F des ersten Regalbediengerätes 6 verläuft. Über dieses zweite Regalbediengerät 8 werden die Aufträge der Kunden kommissioniert. Hierfür fährt das zweite Regalbediengerät 8 in Fahrtrichtung entlang der Ausgangseite 12b der Lagerkanäle 12 und entnimmt die vollen Getränkekisten 2a in der gewünschten Anzahl und Sorte. Wenn der Kommissioniervorgang abgeschlossen ist und die kommissionierten vollen Getränkekisten 2a auf dem Hubtisch des zweiten Regalbediengerätes 8 zwischengelagert sind, verfährt das zweite Regalbediengerät 8 zu einem der Aus- und Rückgabebereiche 3, die entlang des zweiten Ganges 13 auf der dem Lagerbereich 7 gegenüberliegenden Seite angeordnet sind. Das zweite Regalbediengerät 8 übergibt nun die kommissionierten vollen Getränkekisten 2a an eine Hubplattform 14, die Bestandteil des Aus- und Rückgabebereiches 3 ist. Für die Ausgabe der kommissionierten vollen Getränkekisten 2a wird die Hubplattform 14 etwa um einen Meter abgesenkt, bis da Niveau eines Ausgabeförderers 15 erreicht wird. Dann werden die kommissionierten vollen Getränkekisten 2a seitlich von der Hubplattform 14 mittels eines Schiebers 16 auf den Ausgabeförderer 15 geschoben. Der Ausgabeförderer 15 kann beispielsweise als Rollenbahn mit leichtem Gefälle ausgebildet sein, so dass von einem Kunden die vollen Getränkekisten 2a an einem Ende des Ausgabeförderers 15 entnommen werden können.

Alternativ können im Falle von beispielsweise per Telefon oder Internet vorbestellter Aufträge die kommissionierten vollen Getränkekisten 2a in einem Zwischenlagerbereich 9 abgestellt werden. Dieser Zwischenlagerbereich 9 grenzt an den zweiten Gang 13 und zwar auf dessen dem Lagerbereich 7 abgewandten Seite. Außerdem ist der Zwischenlagerbereich 9 in Abschnitte unterteilt, die zwischen den Aus- und Rückgabebereichen 3 angeordnet sind. Wenn die Abholung der vorkommissionierten vollen Getränkekisten 2a dann ansteht, werden diese von dem zweiten Regalbediengerät 8 wieder aus dem Zwischenlagerbereich 9 aufgenommen und einem der Aus- und Rückgabebereiche 3 zugeführt.

Neben dem Ausgabeförderer 15 weist der Aus- und Rückgabebereich 3 zusätzlich noch einen Rückgabeautomat 17 auf, an dem der Kunden leere Getränkeflaschen und leere Getränkekisten 2b abgeben kann. Dort werden die leeren Getränkeflasche den leeren Getränkekisten 2b zugeführt und dann an einen angrenzenden Leergutförderer 18 übergeben. Der Leergutförderer 18 ist beispielsweise als angetriebene Rollenbahn ausgebildet und verläuft entlang des gesamten zweiten Regalganges 13 auf der dem Lagerbereich 7 gegenüberliegenden Seite sowie auf einem Niveau der abgesenkten Hubplattform 14.

Um den Leergutförderer 18 im Bereich der angehobenen Hubplattform 14 zu überbrücken, ist ein tafelförmiges Verbindungselement 19 vorgesehen, das einerseits an der Hubplattform 14 und andererseits an dem zweiten Gang 13 angrenzt.

Der Leergutförderer 18 verbindet die Aus- und Rückgabebereiche 3 mit dem ersten Gang 11. Hierfür verläuft der Leergutförderer 18 zwischen Lagerbereich 7 und dem Bereitstellbereich 5 hindurch und grenzt an den ersten Gang 11 an. Hier werden die leeren Getränkekisten 2b von dem ersten Regalbediengerät 6 aufgenommen und an eine erste Abzugs-Rollenbahn 5e mit einer ersten Breite b1 oder eine zweiten Abzugs-Rollenbahn 5f mit einer zweiten Breite b2 zugeführt. An Stelle von Rollenbahnen können auch andere geeignete Stetigförderer eingesetzt werden. Am Ende der Abzugs-Rollenbahnen 5e und 5f folgt ein Palletierungsbereich 5b, in dem die einzelnen leeren Getränkekisten 2b auf Paletten gestapelt werden und anschließend an den Anlieferungs- und Abholungsbereich 4 übergeben werden, wo ein Abholung durch Lastkraftwagen stattfindet.

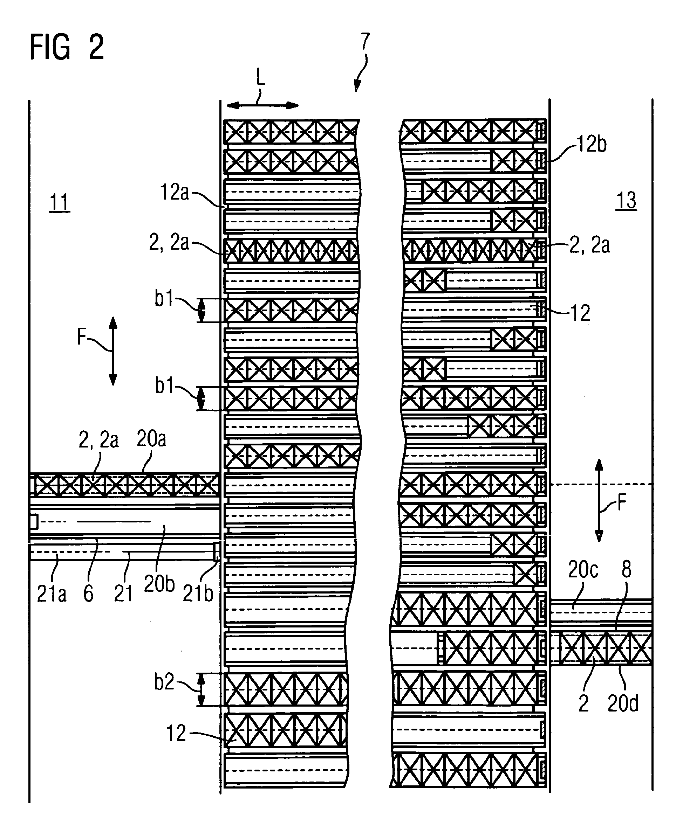

Die FIG 2 zeigt einen detaillierteren Ausschnitt von FIG 1 aus dem Bereich des ersten Regalbediengerätes 6, des Lagerbereichs 7 und dem zweiten Regalbediengerätes 8.

Es ist ersichtlich, dass auf dem Hubtisch des ersten Regalbediengerätes 6 die Ein- und Auslagerungsvorrichtungen in Form eines ersten Ein- und Auslagerungselementes 20a für eine Gruppe 2c der Stückgüter 2 mit einer ersten Breite b1, eines zweiten Ein- und Auslagerungselementes 20b für eine Gruppe 2c der Stückgüter 2 mit einer zweiten Breite b2 und eines Schubelementes 21 ausgebildet sind, die parallel nebeneinander in einer Ebene auf dem Hubtisch des ersten Regalbediengeräts 6 angeordnet sind. Hierbei ist das Schubelement 21 neben den Ein- und Auslagerungselementen 20a und 20b angeordnet.

Der Lagerbereich 7 ist als Hochregal ausgebildet mit einer Vielzahl von in Zeilen und Spalten und somit nebeneinander und übereinander angeordneten Lagerkanälen 12, die sich mit ihrer Längserstreckung L parallel zur Einlagerungsrichtung E erstrecken. Der Lagerbereich 7 wird als Durchlaufregal betrieben und die Lagerkanäle 12 weisen somit eine Eingangsseite 12a und eine Ausgangsseite 12b auf. Hierbei ist die Eingangsseite 12a dem ersten Regalbediengerät 6 zugeordnet.

Die Lagerkanäle 12 bestehen im Wesentlichen aus zwei nicht dargestellten Winkelprofilen 25, deren einer Schenkel jeweils als seitliche Begrenzung des Lagerkanals 12 und deren anderer Schenkel zur Abstützung der Stückgüter 2 dient. Außerdem haben die Lagerkanäle 12 verschiedene Breiten b1 und b2 in Anpassung an die zu lagernden Stückgüter 2. Die Länge der Lagerkanäle 12 kann an die jeweiligen Gegebenheiten angepasst werden. Im vorliegenden Fall können etwa 30 Stückgüter 2 hintereinander eingelagert werden.

Des Weiteren zeigt die FIG 2, dass auf dem Hubtisch des zweiten Regalbediengerätes 8 die Ein- und Auslagerungsvorrichtungen in Form eines dritten Ein- und Auslagerungselementes 20c für eine Gruppe 2c der Stückgüter 2 mit einer ersten Breite b1 und eines vierten Ein- und Auslagerungselementes 20d für eine Gruppe 2c der Stückgüter 2 mit einer zweiten Breite b2 ausgebildet ist, die parallel nebeneinander in einer Ebene auf dem Hubtisch des zweiten Regalbediengeräts 8 angeordnet sind.

Bei bestimmten Breitenverhältnissen der Getränkekisten ist es möglich, auf nur eine Breite b1 oder b2 auf dem Hubtisch des zweiten Regalbediengerätes 8 zu kommissionieren, ohne dass die Getränkekisten abstürzen oder sich verklemmen.

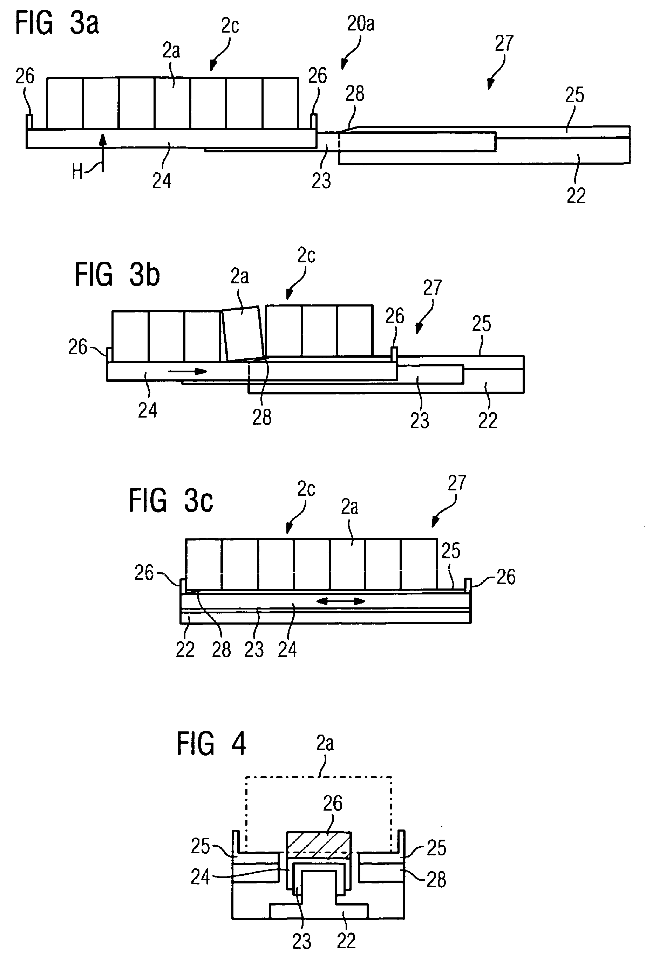

An Hand der Figuren 3a bis 3c, die verschiedene Phasen eines Aufnahmevorganges von Stückgütern 2 auf ein Regalbediengerät 6 oder 8 zeigen, wird nun der Aufbau der und die Funktionsweise der vier Ein- und Auslagerungselemente 20a, 20b, 20c und 20c näher erläutert.

Für eine Beladung des ersten Regalbediengerätes 6 mit einer Gruppe 2c von Stückgütern 2 fährt das erste Regalbediengerät 6 beispielsweise vor das ausgangsseitige Ende der ersten Bereitstell-Rollenbahn 5c in der ersten Breite b1, auf der die einzulagernden vollen Getränkekisten 2a ruhen. Hierbei wird das erste Regalbediengerät 6 so vor dem ausgangsseitigen Ende der ersten Bereitstell-Rollenbahn 5c positioniert, dass das erste Ein- und Auslagerungselement 20a mit der ersten Breite b1 mit dieser in Horizontal- und Vertikalrichtung fluchtet. Für den Übernahmevorgang der Gruppe 2c von vollen Getränkekisten 2a wird das Ein- und Auslagerungselement 20a mit dem ausgangsseitigen Ende der Bereitstell-Rollenbahnen 5c verriegelt, die Auflaufklappe am Ende der Bereitstell-Rollenbahnen 5c entriegelt und der Spalt zwischen dem ausgangsseitigen Ende der Bereitstell-Rollenbahn 5c und dem Hubtisch überbrückt.

Wenn Ein- und Auslagerungselemente 20a und 20b die Getränkekisten 2a ausheben, dann können anstelle von Auflaufklappen einfache Festanschläge als Durchschubsicherung eingesetzt werden.

Für den eigentlichen Auslagerungsvorgang ist das Ein- und Auslagerungselement 20a als Teleskopelement mit einem Grundrahmen 22, der auf dem Hubtisch des ersten Regalbediengerätes 6 befestigt ist, einen daran in Ein- und Ausfahrrichtung, die mit der Ein- und Auslagerungsrichtung übereinstimmt, verschiebbar geführten Zwischenträger 23 sowie mit einem Endträger 24 ausgebildet, der an dem Zwischenträger 23 in Ein- und Ausfahrrichtung verschiebbar geführt ist.

Die erste Bereitstell-Rollenbahn 5c ist derart ausgebildet, dass die vollen Getränkekisten 2a in Einlagerungsrichtung E gesehen nur an den Seiten auf Rollen aufliegen, so dass das Ein- und Auslagerungselement 20a mit seinem Zwischenträger 23 und seinem Endträger 24 in die Bereitstell-Rollenbahn 5c einfahren und die Gruppe 2c von Getränkekisten 2a unterfahren kann. Wie zuvor beschrieben, ist zwischen der Gruppe 2c der abzuholenden vollen Getränkekisten 2a und den übrigen auf der Bereitstell-Rollenbahn 5c ruhenden Getränkekisten 2a eine Lücke geschaffen worden. Nachdem der Endträger 24 unter der Gruppe 2c von Getränkekisten 2a angekommen ist, wird mittels des Hubtisches des ersten Regalbediengerätes 6 und somit mittels des Endträgers 24 die Gruppe 2c von Getränkekisten 2a von der ersten Bereitstell-Rollenbahn 5c leicht angehoben, wie in der FIG 3a durch die Hubrichtung H angedeutet ist. Die Gruppe 2c von Getränkekisten 2a ruht nun auf dem Endträger 24, der dann in Richtung des Hubtisches des ersten Regalbediengerätes 6 eingefahren wird. An dem Endträger 24 sind jeweils in Ein- und Ausfahrrichtung gesehen vorne und hinten Mitnehmer 26, die ausgehend von der von dem Endträger 24 gebildeten Abstellfläche für die Gruppe 2c von Getränkekisten 2a sich nach oben erstrecken und somit der vordere in Ein- und Ausfahrrichtung gesehen die Gruppe 2c von Getränkekisten 2a hintergreifen kann.

Die Funktion der Mitnehmer 26 wird aus der FIG 3b klarer ersichtlich, in der der Endträger 24 etwa zur Hälfte in Richtung des Hubtisches des ersten Regalbediengerätes 6 eingefahren ist. Auf dem Hubtisch ist ein Aufnahmeplatz 27 für die Gruppe 2c von Getränkekisten 2a vorgesehen, der entsprechend der Lagerkanäle 12 einfach aus Winkelprofilen 25 gebildet ist. Zeichnerisch sind die Winkelprofile 25 nur als Linie dargestellt und somit ist nur deren unterer Schenkel zu sehen. Am Anfang beziehungsweise Ende des Aufnahmeplatzes 27 weisen die Winkelprofile 25 jeweils Anlaufschrägen 28 auf, da die unteren Schenkel der Winkelprofile 25 geringfügig, d. h. etwa 5mm, über dem Niveau der Tragfläche des Endträgers 24 angeordnet sind. Hierdurch kommt es beim Einfahren des Endträgers 24 aus seiner Ausfahrstellung dazu, dass die erste volle Getränkekiste 2a der Gruppe 2c mit ihrer Vorderkante auf die Anlaufschrägen 28 der Winkelprofile 25 trifft. Zunächst wird somit die Gruppe 2c von Getränkekisten 2a dadurch aufgehalten und der Endträger 24 gleitet unter den Getränkekisten 2a hindurch bis der vordere Mitnehmer 26 an der letzten vollen Getränkekiste 2a, d. h. die von der Anlaufschräge 28 am weitesten entfernteste volle Getränkekiste 2a der Gruppe 2c, zur Anlage kommt. Durch die weitere Einfahrbewegung des Endträgers 24 wird somit jede Getränkekisten 2a der Gruppe 2c von Getränkekisten 2a über die Anlaufschräge 28 auf die Winkelprofile 25 des Abstellplatzes 27 geschoben.

In der Darstellung gemäß FIG 3c befindet sich das erste Ein-und Auslagerungselement 20a in der eingefahren Stellung und die Gruppe 2c von vollen Getränkekisten 2a ruht auf den Winkelprofilen 25. Dadurch dass der linke Mitnehmer 26 an der ersten vollen Getränkekiste 2a anliegt ist zu erkennen, dass die Gruppe 2c von vollen Getränkekisten 2a zuvor von links auf die Winkelprofile 25 des Abstellplatzes 27 geschoben wurde. Die Mitnehmer 26 dienen somit zur Sicherung der vollen Getränkekisten 2a auf dem Hubtisch.

Grundsätzlich ist auch denkbar, dass die auf der ersten Bereitstell-Rollenbahn 5c ruhende Gruppe 2c von Stückgütern 2 von dem Mitnehmer 26 hinter griffen wird und ohne Hubbewegung auf den Hubtisch des ersten Regalbediengerätes 5 gezogen. Hierbei ist aber dann auf eine exaktere vertikale Ausrichtung des ersten Regalbediengerätes 6 zu der ersten Bereitstell-Rollenbahn 5c zu achten.

Auch können die Ein- und Auslagerungselemente 20a, 20b, 20c und 20d so ausgebildet sein, dass von diesen die Lücke auf den Bereitstell-Rollenbahnen 5c und 5d über den Mitnehmer 26 an der Spitze des Ein- und Auslagerungselementes 20a, 20b, 20c und 20d in Kombination mit einer Bewegung des Ein- und Auslagerungselementes 20a, 20b, 20c und 20d in die Einlagerungsrichtung E geschaffen wird.

Der Antrieb der teleskopartig ausgebildeten Ein- und Auslagerungselemente 20a, 20b, 20c und 20d erfolgt in bekannter Weise über Zahnstangen oder alternativ über Ketten oder Riemen.

Der Abholvorgang einer Gruppe 2c von Stückgütern 2 in einer zweiten Breite b2 von der zweiten Bereitstell-Rollenbahn 5d mittels des zweiten Ein- und Auslagerungselementes 20b mit einer zweiten Breite b2 verläuft entsprechend.

In einem nächsten Schritt verfährt das mit der Gruppe 2c von vollen Getränkekisten 2a beladene erste Regalbediengerät 6 in dem ersten Gang 11 zu dem gewünschten Lagerort im Lagerbereich 7.

Von dem nun vor dem ausgewählten Lagerkanal 12 stehenden ersten Regalbediengerät 6 wird die Gruppe 2c von Stückgütern 2 von dem ersten Ein- und Auslagerungselement 20a durch dessen Ausfahrbewegung wieder von den Winkelprofilen 25 auf den Endträger 24 geschoben. Anschließend fährt der Endträger 24 mit der Gruppe 2c in den Lagerkanal 14 hinein und setzt dort die vollen Getränkekisten 2a ab. Über einen nicht dargestellten Lagerverwaltungsrechner und entsprechende Sensoren an den Lagerkanälen 12 sowie den Regalbediengeräten 6 und 8 ist der Füllgrad der einzelnen Lagerkanäle 12 bekannt und somit auch wie weit das Ein- und Auslagerungselement 20a in den Lagerkanal 12 einzufahren hat und welche Anzahl von vollen Getränkekisten 2a dort abgestellt werden kann. Bei diesem Einlagerungsvorgang kann es auch dazu kommen, dass an der Ausgangsseite 12b des Lagerkanals 12 bereits einige volle Getränkekisten 2a entnommen worden sind, aber an der Eingangsseite 12a noch keine ausreichender Platz für die Aufnahme der vollständigen Gruppe 2c besteht, insgesamt die Kapazität des Lagerkanals 12 aber ausreicht, um die vollständige Gruppe 2c aufzunehmen. In diesem Fall dient der Endträger 24 nicht nur zum Absetzen der vollen Getränkekisten 2a in den Lagerkanal 12 sondern auch Nachschieben der bereits im Lagerkanal 12 befindlichen Getränkekisten 12 zu dessen Ausgangsseite 12b hin.

Die FIG 4 zeigt eine Seitenansicht von FIG 3c und somit den Eingriff des Mitnehmers 26 mit der vollen Getränkekiste 2a. Auch ist erkennbar, dass der Abstellplatz 27 im Wesentlichen aus den Winkelprofilen 25 gebildet wird, die mit ihren oberen Schenkeln die Getränkekisten 12 seitlich führen.

Der Einschubvorgang einer Gruppe 2c von Stückgütern 2 in den Lagerkanal 12 einer zweiten Breite b2 mittels des zweiten Ein- und Auslagerungselementes 20b mit einer zweiten Breite b2 verläuft entsprechend. Auch können auf dem ersten Regalbediengerät 6 beide Ein- und Auslagerungselemente 20a und 20b parallel mit Stückgütern 2 be- und entladen werden.

Des Weiteren ist auf dem Hubtisch des ersten Regalbediengerätes 6 neben den beiden Ein- und Auslagerungselementen 20a und 20b auch das Schubelement 21 angeordnet, das schematisch in der FIG 2 angedeutet ist. Im Wesentlichen besteht dieses Schubelement 21 aus einem Teleskopteil 21a und einen Schubwagen 21b. Das angetriebene Teleskopteil 21a ist mit einem Ende an dem Hubtisch und mit dem anderen Ende an dem Schubwagen 21b befestigt.

Mittels des Schubelementes 21 ist es möglich, die in dem Lagerkanal 12 ruhenden vollen Getränkekisten 2a in dem Fall nachzuschieben, wenn auf Grund der verbliebenen Anzahl von vollen Getränkekisten 2a in dem Lagerkanal 12 ein Nachschieben mit den Ein- und Auslagerungselementen 20a und 20b nicht mehr möglich ist und auch keine weiteren vollen Getränkekisten 2a zum Nachschieben durch einen Auffüllvorgang vorhanden sind. In diesem Fall fährt der Schubwagen 21b in den Lagerkanal 12 ein und schiebt die verbliebenen vollen Getränkekisten 2c in die Reichweite der dritten und vierten Ein- und Auslagerungselemente 20c und 20d. Entsprechend ist die Ausfahrlänge des Teleskopteils 21a bemessen. Hierfür besteht der Schubwagen 21b im Wesentlichen aus zwei Rädern, die auf den Winkelprofilen 25 des Lagerkanals 12 abrollen, und einem Anlageelement. Auch können weitere Rollen an dem Teleskopteil 21a vorgesehen werden, um das Teleskopteil 21a im ausgefahrenen Zustand auf den Winkelprofilen 25 des Lagerkanals 12 abzustützen. Im Ergebnis kann das Schubelement 21 somit weiter in den Lagerkanal 12 einfahren als die Ein- und Auslagerungselemente 20a und 20b.

Üblicher Weise wird über das Schubelement 21 nachgeschoben, wenn etwa 4 bis 6 volle Getränkekisten 2a auf der Ausgangsseite 12b entnommen worden sind. Falls möglich wird das Nachschieben durch eine Neueinlagerung einer Gruppe 2c von Getränkekisten 2a bevorzugt.

Für die Kommissionierung der vollen Getränkekisten 2a für einen Kundenauftrag fährt das zweite Regalbediengerät 8 mit seinem dritten oder vierten Ein- und Auslagerungselement 20c und 20d an die Ausgangsseite 12b des Lagerkanals 12 mit der gewünschten Getränkesorte. Auf dem Hubtisch des zweiten Regalbediengerätes 8 sind parallel nebeneinander ein drittes Ein- und Auslagerungselement 20c in einer ersten Breite b1 und ein viertes Ein- und Auslagerungselement 20d in einer zweiten Breite b2 angeordnet. Ein Schubelement wird hier nicht benötigt. Bei bestimmten Breitenverhältnissen der Getränkekisten ist es möglich, auf nur eine Breite b1 oder b2 zu kommissionieren, ohne dass die Getränkekisten abstürzen oder verklemmen. In Vergleich zu dem ersten Regalbediengerät 6 sind die Ein- und Auslagerungselemente 20c und 20d des zweiten Regalbediengerätes 8 kürzer und können etwa 4 bis 6 volle Getränkekisten 2a hintereinander aufnehmen.

Beide Regalbediengeräte 6 und 8 sind in Hinblick auf Ihren Stahlbau durch eine entsprechend breite Basis und andere Maßnahmen so stabil ausgebildet, dass etwaige Schwingungen der langen ausgefahrenen Ein- und Auslagerungselemente 20a bis 20d minimiert werden.

Wie zuvor im Zusammenhang mit den Figuren 3a bis 3c und der ersten Bereitstell-Rollenbahn 5c beschrieben erfolgt die Aufnahme einer einzelnen vollen Getränkekiste 2a oder einer Gruppe 2c hiervon in der gleichen Weise. Als erster Schritt wird mittels der Ein- und Auslagerungselemente 20c und 20d eine Lücke hinter den auszulagernden vollen Getränkekisten 2a geschaffen. Dies erfolgt durch Anheben, kurzes der Länge der Lücke entsprechendes Ausfahren und Absenken der auszulagernden vollen Getränkekiste 2a sowie erneutes Einfahren und Anheben der auszulagernden vollen Getränkekiste 2a, wobei dann der Mitnehmer 26, in die geschaffene Lücke greift, also die letzte volle Getränkekiste 2a hinter greift. Für das Schaffen der Lücke mittels der Ein- und Auslagerungselemente 20c und 20d ist der Mitnehmer 26 federnd absenkbar und vorzugsweise einseitig an dem Endelement 24 befestigt.

An der Ausgangsseite der Lagerkanäle 12 sind jedoch keine Auflaufklappen zu finden, sondern feststehende Stoppelemente in Form von Aufkantungen der Winkelprofile 25 vorgesehen. Dies ist konstruktiv besonders einfach. Mittels der Ein- und Auslagerungselemente 20c und 20d werden die zu kommissionierenden Getränkekisten 2a über diese Stoppelemente hinweg gehoben. Diese sind aber ausreichend hoch, um ein Herauswandern oder Herausschieben der Getränkekisten 2a aus dem Lagerkanal 12 zu verhindern.

Am Ende des Kommissioniervorganges werden die kommissionierten Getränkekisten 2a wie zuvor bei der Übernahme von den Bereitstell-Rollenbahnen 5c und 5d auf die Winkelprofile 25 des Aufnahmeplatzes 27 des zweiten Regalbediengerätes 8 geschoben.

Nachdem das zweite Regalbediengerät 8 den Kommissioniervorgang abgeschlossen hat, fährt es zu einem der entlang des Gangs 13 angeordneten Aus- und Rückgabebereiche 3, an dem der Kunde wartet, oder lagert bei einem vorbestellten Auftrag die kommissionierten Getränkekisten 2a in dem Zwischenspeicherbereich 9 ein.

In dem ersten Fall fährt das Ein- und Auslagerungselement 20c des zweiten Regalbediengerätes 8 die kommissionierten Getränkekisten 2a in Richtung der Hubplattform 14 aus und dessen Endträger 24 wird dann zum Abstellen der kommissionierten Getränkekisten 2a abgesenkt. Hierbei fährt das Ein- und Auslagerungselement 20c über das Verbindungselement 19, das den Leergutförderer 18 überbrückt und als Absturzsicherung dient, hinaus. Entsprechend grenzt die Hubplattform 14 nicht direkt an den zweiten Gang 13 an und das Ein- und Auslagerungselement 20c muss entsprechend länger ausgebildet sein.

Damit die kommissionierten Getränkekisten 2a auf die Hubplattform 14 mittels des Endträgers 24 abgestellt werden können, weist diese eine in dessen Längsrichtung verlaufende zentrale Längsöffnung 29 auf, in die der Endträger 24 und der Zwischenträger 23 einfahren und auch dort abgesenkt werden können.

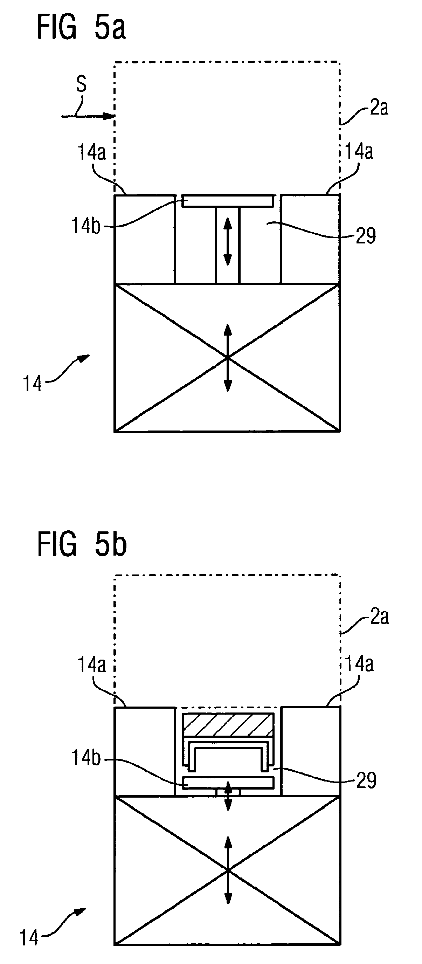

In den Figuren 5a und 5b eine schematische Ansicht einer Hubplattform 14 eines Aus- und Rückgabebereiches 3 dargestellt. Es ist ersichtlich, dass die kommissionierten Getränkekisten 2a auf der Hubplattform 14 ruhen. In der FIG 5b ist die Längsöffnung 29 zu erkennen, in die der Endträger 24 und der Zwischenträger 23 einfahren. Das Stückgut 2 ruht mit seinen Randbereichen auf den an die Längsöffnung 29 angrenzenden Aufnahmeflächen 14a der Hubplattform 14.

Nachdem die kommissionierten Getränkekisten 2a auf den Aufnahmeflächen 14a der Hubplattform 14 abgesetzt worden sind sowie der Endträger 24 und der Zwischenträger 23 aus der Längsöffnung 29 heraus gefahren worden sind, wird die Längsöffnung 29 verschlossen. Hierfür fährt von unten bis auf das Niveau der Aufnahmeflächen 14a eine Verschlussplatte 14b. Die beiden Aufnahmeflächen 14a und die Verschlussplatte 14b bilden somit eine durchgehende Auflagefläche für das Stückgut 2.

Anschließend wird die quaderförmig verkleidete Hubplattform 14 etwa um einen Meter auf das Niveau des Ausgabeförderers 15 absenkt und dann werden die kommissionierten Getränkekisten 2a von der Aufnahmefläche 14a und der Verschlussplatte 14b quer zur Einlagerungsrichtung in eine parallel zur Fahrtrichtung F verlaufende Schieberichtung mit einem Schieber 16 auf den Ausgabeförderer 15 geschoben. Dadurch dass die Hubplattform 14 quaderförmig ausgebildet ist, verschließt sie in der angehobenen Stellung wandartig den Ausgabeförderer 15 gegenüber dem automatisch arbeitenden zweiten Regalbediengerät 2 ab. Es bietet sich an, den Ausgabeförderer 15 nur an einem Ende und somit außerhalb des Arbeitsbereiches des Schiebers 16 für den Kunden zugänglich zu machen.

Es ist auch denkbar, anstelle der absenkbaren Hubplattform 14 im Aus- und Rückgabebereich 3 Lösungen mit Ausgabetunneln oder Ausgabeklappen vorzusehen, um den automatischen Lagerbereich sicher von den Kunden abzutrennen.

Der Kommissionierung einer Gruppe 2c von Stückgütern 2 einer zweiten Breite b2 mittels des vierten Ein- und Auslagerungselementes 20d mit einer zweiten Breite b2 verläuft entsprechend. Auch können auf dem zweiten Regalbediengerät 8 beide Ein- und Auslagerungselemente 20c und 20d parallel mit Stückgütern 2 be- und entladen werden.

Zu dem Aus- und Rückgabebereich 3 gehört auch ein Rückgabeautomat 17, an dem die Kunden die leeren Getränkekisten 2b abgeben können. Von dem Rückgabeautomat 17 gelangen die leeren Getränkekisten 2b auf einen Leergutförderer 18, an dessen Ende im Bereich des ersten Ganges 11 ein weiterer nicht dargestellter Schieber vorgesehen ist. Mittels dieses Schiebers wird eine Gruppe 2c von leeren Getränkekisten 2b quer zur Längsrichtung des Leergutförderers 18 auf eine Bereitstell-Plattform 30 geschoben, die wie die Hubplattform 14 eine Längsöffnung mit einer vertikal verfahrbaren Verschlussplatte aufweist, um einerseits die aufgeschobenen leeren Getränkekisten 2b sicher aufnehmen zu können und andererseits das Einfahren der ersten oder zweiten Ein- und Auslagerungselemente 20a und 20b zu erlauben.

In der vorstehenden Beschreibung sind die erste Bereitstell-Rollenbahn 5c, die zweite Bereitstell-Rollenbahn 5d, die erste Abzugs-Rollenbahn 5e und die zweite Abzugs-Rollenbahn 5f als Rollenbahnen mit Auflaufklappen am Abzugsende beschrieben. Es ist auch denkbar, dass diese analog den Lagerkanälen aus Winkelprofilen 25 aufgebaut sind.

Des Weiteren sind in dem Ausführungsbeispiel die Stückgüter 2 als Getränkekisten beschrieben. Es ist auch denkbar, dass ähnlich sperrige beziehungsweise unhandliche Gebinde aus dem Konsumgüter- und Industriebereich als Stückgüter zum Einsatz kommen können.

## Patentansprüche

1. Verfahren zum Ein- und Auslagern von Stückgütern (2), insbesondere von Getränkekisten (2), in einen oder aus einem Lagerbereich (7), der als Durchlauflager ausgebildet ist und eine Vielzahl von Lagerkanälen (12) aufweist,
**dadurch gekennzeichnet, daß**
- die Stückgüter (2) an einer Ausgangsseite (12b) des Lagerbereichs (7) mittels eines teleskopartigen Auslagerungselementes (20c, 20d) eines ausgangsseitigen Regalbediengeräts (8) aus den Lagerkanälen (12) ausgelagert werden, wobei es die Stückgüter über ein Stoppelement anhebt,
- nach erfolgtem Auslagern von Stückgütern (2) aus einem Lagerkanal (12) weitere Stückgüter (2) an einer Eingangsseite (12a) des Durchlauflagers mittels eines teleskopartigen Einlagerungselementes (20a, 20b) eines eingangsseitigen Regalbediengeräts (6) in den jeweiligen Lagerkanal (12) hineinbewegt und durch eine Senkbewegung in dem jeweiligen Lagerkanal (12) abgestellt werden,
- hierbei die bereits in dem jeweiligen Lagerkanal (12) abgestellten Stückgüter (2) innerhalb des Lagerkanals (12) von dem Einlagerungselement (20a, 20b) in Richtung der Ausgangsseite (12b) des Lagerbereichs (7) verschoben werden,
- die in dem jeweiligen Lagerkanal (12) befindlichen Stückgüter (2) mittels eines an dem eingangsseitigen Regalbediengerät (6) angeordneten Schubelementes (21), das zum Nachschieben einzelner oder einer Gruppe von Stückgütern (2) in den Lagerkanal (12) hineinbewegt wird und dessen Einschubtiefe größer als die des Einlagerungselementes (20a, 20b) ist, in Richtung der Ausgangsseite (12b) des Lagerkanals (12) bei Bedarf verschoben werden.

2. Verfahren nach Anspruch 1,
**dadurch gekennzeichnet, dass** die Stückgüter (2) während deren Verschiebebewegung in den Lagerkanälen (12) gleitend bewegt werden.

3. Verfahren nach einem der Ansprüche 1 oder 2,
**dadurch gekennzeichnet, dass** die Stückgüter (2) dadurch aus den Lagerkanälen (12) ausgelagert werden, dass das Auslagerungselement (20c, 20d) in den jeweiligen Lagerkanal (12) einfährt und die gewünschte Anzahl von Stückgütern (2) anhebt und über das an der Ausgangsseite (12b) des Lagerbereiches (7) angeordnete Stoppelement herüber hebt.

4. Verfahren nach einem der Ansprüche 1 bis 3,
**dadurch gekennzeichnet, dass** die von den Ein- und Auslagerungselementen (20a bis 20d) aufgenommenen Stückgüter (2) von den Ein- und Auslagerungselementen (20a bis 20d) auf einen Aufnahmeplatz (27) des jeweiligen Regalbediengerätes (6, 8) geschoben werden.

5. Verfahren nach einem der Ansprüche 1 bis 4,
**dadurch gekennzeichnet, dass** für die Aufnahme oder Abgabe von Stückgütern (2) mittels der Ein- und Auslagerungselemente (20a bis 20d) von einer Bereitstell-Plattform (30) oder einer Hubplattform (14) in der Bereitstell-Plattform (30) oder der Hubplattform (14) eine in Aufnahme- oder Abgaberichtung mittige Längsöffnung (29) durch Absenken einer Verschlussplatte (14b) geöffnet wird, in welche die Ein- und Auslagerungselemente (20a bis 20d) anschließend einfahren.

6. Verfahren nach Anspruch 5,
**dadurch gekennzeichnet, dass** die mittige Längsöffnung (29) durch Anheben der Verschlussplatte (14b) geschlossen wird und anschließend die Stückgüter (2) quer zur Aufnahme- oder Abgaberichtung auf die Bereitstell-Plattform (30) geschoben oder von der Hubplattform (14) herunter geschoben werden.

7. Lagersystem für Stückgüter (2), insbesondere für Getränkekisten (2), mit einem Lagerbereich (7),
- wobei der Lagerbereich (7) als Durchlauflager ausgebildet ist und eine Vielzahl von Lagerkanälen (12) aufweist,
- wobei der Lagerbereich (7) eine Eingangsseite (12a) und eine Ausgangsseite (12b) aufweist,
**dadurch gekennzeichnet, daß**
- das Lagersystem ein der Ausgangsseite (12b) des Lagerbereiches (7) zugeordnetes ausgangsseitiges Regalbediengerät (8) für die Auslagerung der Stückgüter (2) und ein der Eingangsseite (12a) des Lagerbereiches (7) zugeordnetes eingangsseitiges Regalbediengerät (6) für die Einlagerung der Stückgüter (2) aufweist,
- das ausgangsseitige Regalbediengerät (8) ein teleskopartiges Auslagerungselement (20c, 20d) aufweist, mittels dessen die Stückgüter (2) an der Ausgangsseite (12b) des Lagerbereichs (7) über ein Stoppelement ausgehaben und aus den Lagerkanälen (12) ausgelagert werden,
- das eingangsseitige Regalbediengerät (6) ein teleskopartiges Einlagerungselement (20a, 20b) aufweist, mittels dessen nach erfolgtem Auslagern von Stückgütern (2) aus einem Lagerkanal (12) weitere Stückgüter (2) an der Eingangsseite (12a) des Durchlauflagers in den jeweiligen Lagerkanal (12) hineinbewegt und durch eine Senkbewegung in dem jeweiligen Lagerkanal (12) abgestellt werden,
- hierbei die zuvor in dem jeweiligen Lagerkanal (12) abgestellten Stückgüter (2) innerhalb des Lagerkanals (12) von dem Binlagerungselement (20a, 20b) in Richtung der Ausgangsseite (12b) des Lagerbereiches (7) verschoben werden,
- an dem eingangsseitigen Regalbediengerät (6) ein Schubelement (21) angeordnet ist, das zum Nachschieben einzelner oder einer Gruppe von Stückgütern (2) in den Lagerkanal (12) hineinbewegbar ist und mittels dessen die in dem jeweiligen Lagerkanal (12) befindlichen Stückgüter (2) in Richtung der Ausgangsseite (12b) des Lagerbereiches (7) verschiebbar sind,
- die Einschubtiefe des Schubelementes (21) größer als die des Einlagerungselementes (20a, 20b) ist,
- die Lagerkanäle (12) passiv ausgebildet sind.

8. Lagersystem nach Anspruch 7,
**dadurch gekennzeichnet, dass** die Stückgüter (2) innerhalb der Lagerkanäle (12) von der Eingangsseite (12a) zu der Ausgangsseite (12b) gleitend bewegbar sind.

9. Lagersystem nach Anspruch 7 oder 8,
**dadurch gekennzeichnet, dass** jeder Lagerkanal (12) aus zwei Winkelprofilen (25) besteht, von denen die Stückgüter (2) bei der Bewegung von der Eingangsseite (12a) zu der Ausgangsseite (12b) seitlich geführt und getragen werden.

10. Lagersystem nach Anspruch 9,
**dadurch gekennzeichnet, dass** in Längserstreckung (L) der Lagerkanäle (12) gesehen die Winkelprofile (25) parallel und mit Abstand zueinander angeordnet sind.

11. Lagersystem nach einem der Ansprüche 9 bis 10,
**dadurch gekennzeichnet, dass** das Schubelement (21) aus einem mit dem ersten Regalbediengerät (6) verbundenen Teleskopteil (21a) und einem an seinem dem eingangsseitigen Regalbediengerät (6) abgewandten Ende angeordneten Schubwagen (21b) besteht und dass der Schubwagen (21b) auf den Winkelprofilen (25) verfahrbar ist.

12. Lagersystem nach einem der Ansprüche 7 bis 11,
**dadurch gekennzeichnet**, die Stückgüter (2) mittels des Auslagerungselements (20c, 20d) über das an der Ausgangsseite (12b) des Lagerbereiches (7) angeordnete Stoppelement hebbar sind.

13. Lagersystem nach Anspruch 12,
**dadurch gekennzeichnet, dass** auf den Regalbediengeräten (6, 8) jeweils ein Aufnahmeplatz für die Stückgüter (2) angeordnet ist, auf die mittels der Ein- und Auslagerungselemente (20a bis 20d) die aufgenommenen Stückgüter (2) schiebbar sind.

14. Lagersystem nach einem der Ansprüche 7 bis 13,
**dadurch gekennzeichnet, dass** den Regalbediengeräten (6, 8) für die Aufnahme oder Abgabe von Stückgütern (2) mittels der Ein- und Auslagerungselemente (20a bis 20d) eine Bereitstell-Plattform (30) oder eine Hubplattform (14) zugeordnet sind, in der Bereitstell-Plattform (30) oder der Hubplattform (14) eine in Aufnahme- oder Abgaberichtung mittige Längsöffnung (29) angeordnet ist, in die Ein- und Auslagerungselemente (20a bis 20d) einfahrbar sind, und die Längsöffnung (29) mittels einer anhebbaren Verschlussplatte (14b) verschließbar ist.

15. Lagersystem nach Anspruch 14,
**dadurch gekennzeichnet, dass** der Bereitstell-Plattform (30) oder der Hubplattform (14) ein Schieber (16) zugeordnet ist, über den die Stückgüter (2) bei verschlossener Längsöffnung (29) quer zur Aufnahme- oder Abgaberichtung auf die Bereitstell-Plattform (30) oder von der Hubplattform (14) herunter schiebbar sind.

## Claims

1. Method of storing and removing from storage packaged goods (2), particularly drinks crates (2), in or from a storage area (7), which is in the form of a live storage system and has a plurality of storage channels (12), **characterized in that**
- the packaged goods (2) on the removal side (12b) of the storage area (7) are removed from the storage channels (12) by means of a telescopic removal element (20c, 20d) of a rack picking device (8) on the removal side, wherein said element raises the packaged goods above a stop element,
- once packaged goods (2) have been removed from a storage channel (12), further packaged goods (2) on an entry side (12a) of the live storage system are moved by means of a telescopic storage element (20a, 20b) of a rack picking device (6) into the respective storage channel (12) and set down in the respective storage channel (12) by a lowering movement,
- in this case, the packaged goods (2) which have already been set down in the respective storage channel (12) are moved within the storage channel (12) by the storage element (20a, 20b) in the direction of the removal side (12b) of the storage area (7),
- the packaged goods (2) located in the respective storage channel (12) are moved where necessary in the direction of the removal side (12b) of the storage channel (12) by means of a pushing element (21) disposed on the entry side of the rack picking device (6), which is moved in to push an individual or a group of packaged goods (2) into the storage channel (12), the insertion depth of said pushing element being greater than that of the storage element (20a, 20b).

2. Method according to Claim 1
**characterized in that** the packaged goods (2) are moved in a sliding manner into the storage channels (12) during their movement.

3. Method according to one of the Claims 1 and 2,
**characterized in that** the packaged goods (2) are removed from the storage channels (12) **in that** the removal element (20c, 20d) is introduced into the respective storage channel (12) and lifts the desired number of packaged goods (2) and raises them above the stop element disposed on the removal side (12b) of the storage area (7).

4. Method according to one of the Claims 1 to 3,
**characterized in that** the packaged goods (2) received by the storage and removal elements (20a to 20d) are pushed by said storage and removal elements (20a to 20d) onto a receiving location (27) of the respective rack picking device (6, 8).

5. Method according to one of the Claims 1 to 4,
**characterized in that**, for the receiving or delivery of packaged goods (2) by means of the storage and removal elements (20a to 20d) of a supply platform (30) or a lifting platform (14), a central longitudinal opening (29) in the receiving or delivery direction is opened in the supply platform (30) or the lifting platform (14) by lowering a closing plate (14b), into which the storage and removal elements (20a to 20d) are then introduced.

6. Method according to Claim 5,
**characterized in that** the central longitudinal opening (29) is closed by raising the closing plate (14b) and the packaged goods (2) are then pushed transversely to the receiving or delivery direction onto the supply platform (30) or pushed under by the lifting platform (14).

7. Storage system for packaged goods (2), particularly for drinks crates (2), having a storage area (7),
- wherein the storage area (7) is in the form of a live storage system and has a plurality of storage channels (12),
- wherein the storage area (7) has an entry side (12a) and a removal side (12b),
**characterized in that**
- the storage system has a rack picking device (8) on the removal side assigned to the removal side (12b) of the storage area (7) for the removal of packaged goods (2) and a rack picking device (6) on the entry side assigned to the entry side (12a) of storage area (7) for the storage of packaged goods (2),
- the rack picking device (8) on the removal side has a telescopic removal element (20c, 20d), by means of which the packaged goods (2) on the removal side (12b) of the storage area (7) are raised above a stop element and removed from the storage channels (12),
- the rack picking device (6) on the entry side has a telescopic storage element (20a, 20b), by means of which further packaged goods (2) can be moved into the respective storage channel (12) on the entry side (12a) of the live storage system following the removal of packaged goods (2) from a storage channel (12) and set down in the respective storage channel (12) by a lowering movement,
- in this case, the packaged goods (2) previously set down in the respective storage channel (12) are moved by the storage element (20a, 20b) within the storage channel (12) in the direction of the removal side (12b) of the storage area (7),
- a pushing element (21) is disposed on the rack picking device (6) on the entry side, said element being inwardly movable to push individual or a group of packaged goods (2) further into the storage channel (12) and by means of which the packaged goods (2) located in the respective storage channel (12) can be moved in the direction of the removal side (12b) of the storage area (7),
- the insertion depth of the pushing element (21) is greater than that of the storage element (20a, 20b),
- the storage channels (12) are passively formed.

8. Storage system according to Claim 7,
**characterized in that** the packaged goods (2) are movable within the storage channels (12) in a sliding manner from the entry side (12a) to the removal side (12b).

9. Storage system according to Claim 7 or 8,
**characterized in that** each storage channel (12) comprises two angle profiles (25), by which the packaged goods (2) are guided laterally and carried during movement from the entry side (12a) to the removal side (12b).

10. Storage system according to Claim 9,
**characterized in that** the angle profiles (25) are arranged parallel and at a distance from one another as seen in the longitudinal extension (L) of the storage channels (12).

11. Storage system according to one of the Claims 9 to 10,
**characterized in that** the pushing element (21) comprises a telescopic part (21a) connected to the first rack picking device (6) and a trolley (21b) disposed at its end facing away from the rack picking device (6) on the entry side and that the trolley (21b) can travel on the angle profiles (25).

12. Storage system according to one of the Claims 7 to 11,
**characterized in that** the packaged goods (2) can be lifted by means of the removal element (20c, 20d) above the stop element disposed on the removal side (12b) of the storage area (7).

13. Storage system according to Claim 12,
**characterized in that** a receiving location for packaged goods (2) is arranged on each of the rack picking devices (6, 8), onto which the received packaged goods (2) can be pushed by means of the storage and removal elements (20a to 20d).

14. Storage system according to one of the Claims 7 to 13,
**characterized in that** a supply platform (30) or a lifting platform (14) is assigned to the rack picking devices (6, 8) for receiving or delivering packaged goods (2) by means of the storage and removal elements (20a to 20d), a central longitudinal opening (29) in the receiving or delivery direction is disposed in the supply platform (30) or the lifting platform (14), into which storage and removal elements (20a to 20d) can be introduced, and the longitudinal opening (29) can be closed by means of a raisable closing plate (14b).

15. Storage system according to Claim 14,
**characterized in that** the supply platform (30) or the lifting platform (14) is assigned a feeder (16), via which the packaged goods (2) can be pushed onto the supply platform (30) or down from the lifting platform (14) transversely to the receiving and delivery direction when the longitudinal opening (29) is closed.

## Revendications

1. Procédé de stockage et de déstockage de marchandises ( 1 ) en colis, notamment de caisses ( 2 ) de boisson, dans ou hors d'une zone ( 7 ) de stockage, qui est constituée sous la forme d'un stockage dynamique et qui a une pluralité de canaux ( 12 ) de stockage,
**caractérisé en ce que**
- on déstocke des canaux ( 12 ) de stockage les marchandises ( 2 ) en colis sur un côté ( 12b ) de la sortie de la zone ( 7 ) de stockage, au moyen d'un élément ( 20c, 20d ) de déstockage télescopique d'un appareil ( 8 ) du côté de la sortie de desserte de rayonnages, lequel arrête les marchandises en colis sur un élément d'arrêt,
- après avoir effectué le déstockage de marchandises ( 2 ) en colis d'un canal ( 12 ) de stockage, on met d'autres marchandises ( 2 ) en colis dans le canal ( 12 ) de stockage respectif sur un côté ( 12a ) de l'entrée du stockage dynamique au moyen d'un élément ( 20a, 20b ) de stockage télescopique d'un appareil ( 6 ) du côté de l'entrée de desserte de rayonnages et on les met par un mouvement d'abaissement dans le canal ( 12 ) de stockage respectif,
- on déplace ainsi les marchandises ( 2 ) en colis déjà mises dans le canal ( 12 ) de stockage respectif au sein du canal ( 12 ) de stockage par l'élément ( 20a, 20b ) de stockage dans la direction du côté ( 12b ) de la sortie de la zone ( 7 ) de stockage,
- on déplace, en cas de besoin, dans la direction du côté ( 12b ) de la sortie du canal ( 12 ) de stockage, les marchandises ( 12 ) en colis se trouvant dans le canal ( 12 ) de stockage respectif au moyen d'un élément ( 21 ) de poussée disposé sur l'appareil ( 6 ) du côté de l'entrée de desserte de rayonnages, élément que, pour repousser individuellement ou en groupe des marchandises ( 2 ) en colis, on fait pénétrer dans le canal ( 12 ) de stockage et dont la profondeur de pénétration est plus grande que celle de l'élément ( 20a, 20b ) de stockage.

2. Procédé suivant la revendication 1,
**caractérisé en ce que** l'on fait glisser les marchandises ( 2 ) en colis pendant leur déplacement dans les canaux ( 12 ) de stockage.

3. Procédé suivant la revendication 1 ou 2,
**caractérisé en ce que** l'on déstocke les marchandises en colis des canaux ( 12 ) de stockage en faisant entrer l'élément ( 20c, 20d ) de déstockage dans le canal ( 12 ) de stockage respectif, qui soulève le nombre souhaité de marchandises ( 2 ) en colis et les élève au-dessus de l'élément d'arrêt disposé sur le côté ( 12b ) de la sortie de la zone ( 7 ) de stockage.

4. Procédé suivant l'une des revendications 1 à 3,
**caractérisé en ce que** l'on pousse les marchandises ( 2 ) en colis reçues par les éléments ( 20a à 20d ) de stockage et de déstockage par les éléments ( 20a à 20d ) de stockage et de déstockage sur un emplacement ( 27 ) de réception de l'appareil ( 6, 8 ) de desserte de rayonnages.

5. Procédé suivant l'une des revendications 1 à 4,
**caractérisé en ce que**, pour recevoir ou remettre des marchandises ( 2 ) en colis au moyen des éléments ( 20a à 20d ) de stockage et de déstockage d'une plateforme ( 30 ) de préparation ou d'une plateforme ( 14 ) de levage à la plateforme ( 30 ) de préparation ou à la plateforme ( 14 ) de levage, une ouverture ( 29 ) longitudinale au milieu dans la direction de réception ou de remise est ouverte par abaissement d'une plaque ( 14b ) de fermeture, dans laquelle entrent ensuite les éléments ( 20a à 20d ) de stockage et de déstockage.

6. Procédé suivant la revendication 5,
**caractérisé en ce que** l'on ferme l'ouverture ( 29 ) longitudinale au milieu en soulevant la plaque ( 14b ) de fermeture et on pousse ensuite les marchandises en colis transversalement à la direction de réception ou de remise sur la plateforme ( 30 ) de préparation ou vers le bas par la plateforme ( 14 ) de levage.

7. Système de stockage de marchandises ( 2 ) en colis, notamment de caisses ( 2 ) de boisson, comprenant une zone ( 7 ) de stockage,
- dans lequel la zone ( 7 ) de stockage est constituée en stockage dynamique et a une pluralité de canaux ( 12 ) de stockage,
- dans lequel la zone ( 7 ) de stockage a un côté ( 12a ) de l'entrée et un côté ( 12b ) de la sortie,
**caractérisé en ce que**
- le système de stockage a un appareil ( 8 ) du côté de la sortie de desserte de rayonnages, qui est associé au côté ( 12b ) de la sortie de la zone ( 7 ) de stockage et qui est destiné au déstockage des marchandises ( 2 ) en colis, et un appareil ( 6 ) du côté de l'entrée de desserte de rayonnages, qui est associé au côté ( 12a ) de l'entrée de la zone ( 7 ) de stockage et qui est destiné au stockage de marchandises ( 2 ) en colis,
- l'appareil ( 8 ) du côté de la sortie de desserte de rayonnages a un élément ( 20c, 20d ) de déstockage télescopique, au moyen duquel les marchandises ( 2 ) en colis sont soulevées au-dessus d'un élément d'arrêt du côté ( 12b ) de la sortie de la zone ( 7 ) de stockage et déstockées des canaux ( 12 ) de stockage,
- l'appareil ( 6 ) du côté de l'entrée de desserte de rayonnages a un élément ( 20a, 20b ) de stockage télescopique, au moyen duquel, après que des marchandises ( 2 ) en colis ont été déstockées d'un canal ( 12 ) de stockage, d'autres marchandises ( 2 ) en colis sont entrées du côté ( 12a ) de l'entrée du stockage dynamique dans le canal ( 12 ) de stockage respectif et sont mises par un mouvement d'abaissement dans le canal ( 12 ) de stockage respectif,
- à cet effet, les marchandises ( 2 ) en colis mises auparavant dans le canal ( 12 ) de stockage respectif sont déplacées en direction du côté ( 12b ) de la sortie de la zone ( 7 ) de stockage dans le canal ( 12 ) de stockage par l'élément ( 20a, 20b ) de stockage,
- sur l'appareil ( 6 ) du côté de l'entrée de desserte des rayonnages est monté un élément ( 21 ) de poussée qui, pour pousser des marchandises ( 2 ) en colis individuellement ou en groupe, peut pénétrer dans le canal ( 12 ) de stockage et au moyen duquel les marchandises ( 2 ) en colis se trouvant dans le canal ( 12 ) de stockage respectif peuvent être poussées dans la direction du côté ( 12b ) de la sortie de la zone ( 7 ) de stockage,
- la profondeur de pénétration de l'élément ( 21 ) de poussée est plus grande que celle de l'élément ( 20a, 20b ) de stockage,
- les canaux ( 12 ) de stockage sont constitués de manière passive.

8. Système de stockage suivant la revendication 7,
**caractérisé en ce que** les marchandises ( 2 ) en colis peuvent glisser à l'intérieur des canaux ( 12 ) de stockage du côté ( 12a ) de l'entrée au côté ( 12b ) de la sortie.

9. Système suivant la revendication 7 ou 8,
**caractérisé en ce que** chaque canal ( 12 ) de stockage est constitué de deux profilés ( 25 ) en équerre, par lesquels les marchandises ( 2 ) en colis sont guidées latéralement et portées lors du déplacement du côté ( 12a ) de l'entrée au côté ( 12b ) de la sortie.

10. Système suivant la revendication 9,
**caractérisé en ce que**, considéré suivant l'étendue ( L ) longitudinale des canaux ( 12 ) de stockage, les profilés ( 25 ) en équerre sont parallèles et à distance les uns des autres.

11. Système suivant l'une des revendications 9 à 10,
**caractérisé en ce que** l'élément ( 21 ) de poussée est constitué d'une partie ( 21a ) télescopique, reliée au premier appareil ( 6 ) de desserte de rayonnages, et d'un chariot ( 21b ) à pousser disposé à son extrémité éloignée de l'appareil ( 6 ) du côté de l'entrée de desserte de rayonnages et **en ce que** le chariot ( 21b ) à pousser peut être déplacé sur les profilés ( 25 ) en équerre.

12. Système suivant l'une des revendications 7 à 11,
**caractérisé en ce que** les marchandises ( 2 ) en colis peuvent être soulevées au moyen de l'élément ( 20c, 20d ) de déstockage au-dessus de l'élément d'arrêt disposé sur le côté ( 12b ) de la sortie de la zone ( 7 ) de stockage.

13. Système suivant la revendication 12,
**caractérisé en ce que**, sur les appareils ( 6, 8 ) de desserte de rayonnages, est disposé respectivement un emplacement de réception des marchandises ( 2 ) en colis, sur lequel les marchandises ( 2 ) en colis reçues peuvent être poussées au moyen des éléments ( 20a à 20d ) de stockage et de déstockage.

14. Système suivant l'une des revendications 7 à 13,
**caractérisé en ce qu'**aux appareils ( 6, 8 ) de desserte de rayonnages sont associées, pour la réception ou la remise de marchandises ( 2 ) en colis au moyen des éléments ( 20a à 20d ) de stockage et de déstockage, une plateforme ( 30 ) de préparation ou une plateforme ( 14 ) de levage, il est ménagé dans la plateforme ( 30 ) de préparation ou dans la plateforme ( 14 ) de levage une ouverture ( 29 ) longitudinale au milieu dans la direction de réception ou de remise, dans laquelle les éléments ( 20a à 20d ) de stockage et de déstockage peuvent entrer et l'ouverture ( 29 ) longitudinale peut être fermée au moyen d'une plaque ( 14b ) de fermeture pouvant être soulevée.

15. Système suivant la revendication 14,
**caractérisé en ce qu'**à la plateforme ( 30 ) de préparation ou à la plateforme ( 14 ) de levage est associé un poussoir ( 16 ), par lequel les marchandises ( 2 ) en colis peuvent, lorsque l'ouverture ( 29 ) longitudinale est fermée, être poussées transversalement à la direction de réception ou de remise sur la plateforme ( 30 ) de préparation ou pousser de la plateforme ( 14 ) de levage vers le bas.
